# EUROPÄISCHE PATENTANMELDUNG

(11) **EP 1 734 298 A2**
(43) Veröffentlichungstag der Anmeldung: **20.12.2006**
(21) Anmeldenummer: 05024995.2
(22) Anmeldetag: 16.11.2005
(51) Int. Cl.: F16L 13/14

(54) **Dichtanordnung einer Rohrleitung für Trinkwasser**

(30) Priorität: 18.06.2005 DE 102005028301
(71) Anmelder: Phoenix AG, 21079 Hamburg (DE)
(72) Erfinder: Maaß, Uwe, Dipl.-Chem. Dr., 22143 Hamburg (DE)
(74) Vertreter: Finger, Karsten

(57) **Zusammenfassung**

Die Erfindung betrifft eine Dichtanordnung (1) einer Rohrleitung für Wasser, insbesondere Trinkwasser, unter Ausbildung eines Verbindungsbereiches (X), bestehend wenigstens aus:
- einem ersten und zweiten Rohrende (2, 3), wobei das zweite Rohrende (3) das erste Rohrende (2) unter Ausbildung eines Ringspaltes (4) umgreift; sowie
- einem Dichtring (7) und/oder einer Dichtschicht (8) aus elastomerem Werkstoff mit mikrobenbeständigen Eigenschaften, der/die den Ringspalt (4) abdichtend überbrückt/überbrücken;

wobei der elastomere Werkstoff auf einer vulkanisierten Kautschukmischung basiert, umfassend eine Kautschukkomponente, die Butylkautschuk oder ein halogenierter Kautschuk ist, sowie übliche Mischungsingredienzien.

Der Verbindungsbereich (X) umfasst insbesondere eine Schlauchkupplung mit Schlauchende (9) oder eine Steck-Muffen-Verbindung.

## Beschreibung

Die Erfindung betrifft eine Dichtanordnung einer Rohrleitung für Wasser, insbesondere Trinkwasser, unter Ausbildung eines Verbindungsbereiches, bestehend wenigstens aus:
- einem ersten und zweiten Rohrende, wobei das zweite Rohrende das erste Rohrende unter Ausbildung eines Ringspaltes umgreift; sowie
- einem Dichtring und/oder einer Dichtschicht aus elastomerem Werkstoff mit mikrobenbeständigen Eigenschaften, der/die den Ringspalt abdichtend überbrückt/überbrücken.

Eine gattungsgemäße Dichtanordnung wird in der Offenlegungsschrift EP 1 505 332 A1 vorgestellt, wobei dem elastomeren Werkstoff ein biologisch aktiver Inhibitor (Biozid) beigemischt ist.

In der Offenlegungsschrift WO 2004/110739 A1 wird ferner eine Trinkwasserleitung aus Kunststoff vorgestellt. Diese Leitung umfasst ein Basisrohr, bestehend aus einem vernetzten oder unvernetzten Polyolefinmaterial, sowie aus wenigstens einer polymeren Diffusions- und Verschleißschutzschicht, die beispielsweise aus Polyamiden, Polyestern oder einem Poly(ethen-co-vinylacetat) bestehen kann.

Im Hinblick auf einen mikrobenbeständigen Werkstoff wird weiterhin auf die Offenlegungsschrift DE 102 58 551 A1 verwiesen, in der eine Klärbeckenmembran beschrieben wird. Diese besteht aus NBR, einem Ethylen-Propolyen-Dien-Mischpolymerisat (EPDM) oder Silikonkautschuk. Auch ein EPDM/NBR-Verschnitt kommt zum Einsatz. Diese Klärbeckenmembran, die mittels einer Perforation gasdurchlässig ist, ist so gestaltet, dass zwecks dauerhafter Gasdurchlässigkeit der vulkanisierten Kautschukmischung ein abwasserbiologisch aktiver Inhibitor, und zwar in Form eines Mikroorganismeninhibitors und Algeninhibitors, beigemischt ist.

An Artikel, wobei hier die Dichtanordnung einer Rohrleitung von Bedeutung ist, die in Kontakt mit Trinkwasser kommen, werden zunehmend hohe Anforderungen gestellt. So dürfen diese keinen negativen Einfluss auf das Trinkwasser ausüben, insbesondere unter dem Aspekt von Geruch und Geschmack, und dürfen ferner nicht zur Verkeimung des Wassers beitragen. Diese Forderungen sind zum Beispiel in den Anforderungen der KTW-Empfehlung, Teil 1.3.13 und dem Arbeitsblatt W270 des DVGW festgelegt.

Im Hintergrund dieses hohen Anforderungsprofils zeichnet sich die neue Dichtanordnung dadurch aus, dass der elastomere Werkstoff auf einer vulkanisierten Kautschukmischung basiert, umfassend eine Kautschukkomponente, die Butylkautschuk (IIR) oder ein halogenierten Kautschuk ist, sowie übliche Mischungsingredienzien.

Der halogenierte Kautschuk ist insbesondere Chlorbutylkautschuk (CIIR) oder Brombutylkautschuk (BIIR). Die Kautschukkomponente ist dabei jeweils vorzugsweise unverschnitten. Der Anteil der Kautschukkomponente beträgt 30 bis 70 Gew.%, insbesondere 40 bis 55 Gew.-%.

Die Kautschukmischung weist einen Füllstoff bzw. ein Füllstoffsystem auf der Basis von Ruß und/oder Kieselsäuren und/oder Silikaten und/oder Kreide auf. Insbesondere gelangt ein Füllstoffsystem auf der Basis von Ruß, Magnesiumsilikat und Kreide zum Einsatz. Der Anteil an Ruß beträgt dabei maximal 30 Gew.-%, insbesondere maximal 20 Gew.-%.

Weitere Mischungsingredienzien sind ein Vernetzer und/oder Vulkanisationsaktivator bzw. Vernetzersystem, Verarbeitungshilfsmittel, beispielsweise Stearinsäure, sowie gegebenenfalls Alterungsschutzmittel und Stabilisatoren. Diesbezüglich wird auf den allgemeinen Stand der Kautschukmischungstechnologie verwiesen. Als Vernetzersystem, umfassend einen Vernetzer und/oder Vulkanisationsaktivator sowie Beschleuniger, wird insbesondere Zinkoxid (Vulkanisationsaktivator) und Zink-N-dibenzyl-dithiocarbamat (Beschleuniger ZBEC) verwendet.

Die Erfindung wird nun anhand von Ausführungsbeispielen unter Bezugnahme auf eine schematische Zeichnung erläutert.

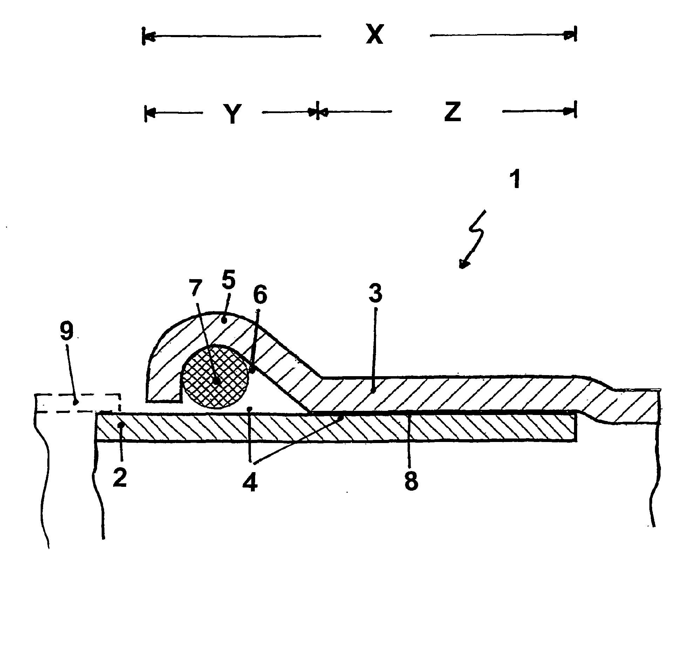

Die einzige Abbildung (Längsschnitt) zeigt den Verbindungsbereich X einer Dichtanordnung 1, umfassend ein erstes Rohrende 2 und zweites Rohrende 3, wobei das zweite Rohrende das erste Rohrende unter Ausbildung eines Ringspaltes 4 umgreift. Das zweite Rohrende ist dabei unter Aufweitung innerhalb seines Endbereiches Y als Muffe 5 ausgebildet, wobei eine Ringkammer 6 entsteht. In dieser Ringkammer ist ein Dichtring 7 aus elastomerem Werkstoff angeordnet, der den Ringspalt abdichtend überbrückt.

Innerhalb der muffenlosen Zone Z des Verbindungsbereiches X ist zusätzlich eine Dichtschicht 8 aus elastomerem Werkstoff in Form einer Dichthülse oder Dichtmanschette angeordnet. Diese Kombination zweier Dichtelemente ist besonders wirksam. Häufig genügt es jedoch, wenn ein Dichtring oder eine Dichtschicht vorhanden ist.

Der mikrobenbeständige elastomere Werkstoff basiert auf der im Kennzeichen des Patentanspruches 1 angegebenen Kautschukmischung, wobei beispielhaft auf folgende Zusammensetzung verwiesen wird.

| Bestandteil | Anteil in Gew.-% |
|---|---|
| Brombutylkautschuk | 44,0 |
| Ruß | 17,0 |
| Magnesiumsilikat | 26,0 |
| Kreide | 8,6 |
| Stearinsäure | 0,5 |
| Zinkoxid | 3,5 |
| Beschleuniger ZBEC | 0,4 |
| | 100,0 |

Die Kautschukmischung ist hier weichmacherfrei.

Insbesondere die Dichtschicht 8 kann zusätzlich mit einer Innenschicht, insbesondere Folienschicht, ausgestattet sein. Diese Innenschicht besteht dabei vorzugsweise aus Polyethylen, das insbesondere unvernetzt ist.

Transportiert die Rohrleitung Wasser in Trinkwasserqualität, so ist die zusätzliche Beimischung eines biologisch aktiven Inhibitors zumeist nicht erforderlich, da die Kautschukmischung gemäß Kennzeichen des Patentanspruches 1, insbesondere in Verbindung mit den Patentansprüchen 2 bis 12, bereits zu einer hohen Mikrobenbeständigkeit beiträgt.

Ist das Wasser dagegen verunreinigt und wird erst noch im Rahmen der Klärwerkstechnologie aufbereitet, so ist es zweckmäßig, der Kautschukmischung zusätzlich einen biologisch aktiven Inhibitor, der schwerlöslich in Wasser ist, beizumischen. In Bezug auf die Gesamtmasse des elastomerem Werkstoffes beträgt der Anteil des Inhibitors 0,1 bis 10 Gew.-%, insbesondere 0,5 bis 5 Gew.-%. Hinsichtlich diesbezüglicher Details wird auf die Offenlegungsschrift DE 102 58 551 A1 verwiesen.

Im Folgenden werden zwei Anwendungsfälle (A, B) beschrieben.
A) Der Verbindungsbereich X umfasst eine Schlauchkupplung, indem das erste und/oder zweite Rohrende ein Rohrstutzen aus Metall oder Kunststoff ist, auf den das Ende eines Schlauches aus polymerem, insbesondere elastomerem Werkstoff ausgebracht ist. Der Schlauch (Trinkwasserschlauch) ist dabei zumeist verstärkt.
   Nach dem vorliegenden Ausführungsbeispiel ist auf das erste Rohrende 2 ein Schlauchende 9 aufgebracht. Das zweite Rohrende 3 kann ebenfalls mit einem weiteren Schlauchende verbunden sein. Aber auch der Anschluss des zweiten Rohrendes an einen Wasserbehälter ist möglich. Auch das Umkehrprinzip ist möglich, indem das Schlauchende 9 ausschließlich auf dem zweiten Rohrende 3 aufgebracht ist.
B) Der Verbindungsbereich X umfasst eine Steck-Muffen-Verbindung, indem das erste Rohrende 2 ein Spitzende und das zweite Rohrende 3 eine Muffe ist, wobei Spitzende und Muffe aus Beton oder Kunststoff ist, und zwar im Rahmen des Kanalbaues. Diesbezüglich wird insbesondere auf die Offenlegungsschrift EP 0 449 082 A2 verwiesen, wobei der Dichtring fest in der Muffe verankert ist.

### Bezugszeichenliste

- 1: Dichtanordnung
- 2: erstes Rohrende
- 3: zweites Rohrende
- 4: Ringspalt
- 5: Muffe
- 6: Ringkammer (Nut)
- 7: Dichtring
- 8: Dichtschicht (Dichthülse, Dichtmanschette)
- 9: Ende eines Schlauches
- X: Verbindungsbereich
- Y: aufgeweiteter Endbereich des zweiten Rohrendes
- Z: muffenlose Zone des Verbindungsbereiches

## Patentansprüche

1. Dichtanordnung (1) einer Rohrleitung für Wasser, insbesondere Trinkwasser, unter Ausbildung eines Verbindungsbereiches (X), bestehend wenigstens aus:
- einem ersten und zweiten Rohrende (2, 3), wobei das zweite Rohrende (3) das erste Rohrende (2) unter Ausbildung eines Ringspaltes (4) umgreift; sowie
- einem Dichtring (7) und/oder einer Dichtschicht (8) aus elastomerem Werkstoff mit mikrobenbeständigen Eigenschaften, der/die den Ringspalt (4) abdichtend überbrückt/überbrücken;
**dadurch gekennzeichnet, dass** der elastomere Werkstoff auf einer vulkanisierten Kautschukmischung basiert, umfassend eine Kautschukkomponente, die Butylkautschuk oder ein halogenierter Kautschuk ist, sowie übliche Mischungsingredienzien.

2. Dichtanordnung nach Anspruch 1, **dadurch gekennzeichnet, dass** der halogenierte Kautschuk Chlorbutylkautschuk oder Brombutylkautschuk ist.

3. Dichtanordnung nach Anspruch 1 oder 2, **dadurch gekennzeichnet, dass** die Kautschukkomponente unverschnitten ist.

4. Dichtanordnung nach einem der Ansprüche 1 bis 3, **dadurch gekennzeichnet, dass** der Anteil der Kautschukkomponente 30 bis 70 Gew.-% beträgt.

5. Dichtanordnung nach Anspruch 4, **dadurch gekennzeichnet, dass** der Anteil der Kautschukkomponente 40 bis 55 Gew.-% beträgt.

6. Dichtanordnung nach einem der Ansprüche 1 bis 5, **dadurch gekennzeichnet, dass** die Kautschukmischung einen Füllstoff bzw. ein Füllstoffsystem auf der Basis von Ruß und/oder Kieselsäuren und/oder Silikaten und/oder Kreide aufweist.

7. Dichtanordnung nach Anspruch 6, **dadurch gekennzeichnet, dass** die Kautschukmischung ein Füllstoffsystem auf der Basis von Ruß, Magnesiumsilikat und Kreide aufweist.

8. Dichtanordnung nach Anspruch 6 oder 7, **dadurch gekennzeichnet, dass** der Anteil an Ruß maximal 30 Gew.-% beträgt.

9. Dichtanordnung nach Anspruch 8, **dadurch gekennzeichnet, dass** der Anteil an Ruß maximal 20 Gew.-% beträgt.

10. Dichtanordnung nach einem der Ansprüche 1 bis 9, **dadurch gekennzeichnet, dass** die Kautschukmischung ein Vernetzersystem, umfassend einen Vernetzer und/oder Vulkanisationsaktivator sowie Beschleuniger, aufweist.

11. Dichtanordnung nach Anspruch 10, **dadurch gekennzeichnet, dass** das Vernetzersystem Zinkoxid als Vulkanisationsaktivator und Zink-N-dibenzyldithiocarbamat als Beschleuniger umfasst.

12. Dichtanordnung nach einem der Ansprüche 1 bis 11, **dadurch gekennzeichnet, dass** die Kautschukmischung weichmacherarm, insbesondere weichmacherfrei, ist.

13. Dichtanordnung nach einem der Ansprüche 1 bis 12, **dadurch gekennzeichnet, dass** der Kautschukmischung zusätzlich ein biologisch aktiver Inhibitor beigemischt ist, insbesondere bei Einsatz einer Rohrleitung für verunreinigtes Wasser.

14. Dichtanordnung nach Anspruch 13, **dadurch gekennzeichnet, dass** der Inhibitor schwerlöslich in Wasser ist.

15. Dichtanordnung nach einem der Ansprüche 1 bis 14, **dadurch gekennzeichnet, dass** die mit dem Wasser in Berührung kommende Stelle des Dichtringes (7) und/oder der Dichtschicht (8), insbesondere der Dichtschicht, mit einer Innenschicht, insbesondere Folienschicht, ausgestattet ist.

16. Dichtanordnung nach Anspruch 15, **dadurch gekennzeichnet, dass** die Innenschicht aus einem Kunststoff, insbesondere Polyethylen, besteht, das insbesondere unvernetzt ist.

17. Dichtanordnung nach einem der Ansprüche 1 bis 16, **dadurch gekennzeichnet, dass** der Verbindungsbereich (X) eine Schlauchkupplung umfasst, indem das erste und/oder zweite Rohrende (2, 3) ein Rohrstutzen aus Metall oder Kunststoff ist, auf den das Ende (9) eines Schlauches aus polymerem, insbesondere elastomerem Werkstoff, aufgebracht ist.

18. Dichtanordnung nach einem der Ansprüche 1 bis 16, **dadurch gekennzeichnet, dass** der Verbindungsbereich (X) eine Steck-Muffen-Verbindung umfasst, indem das erste Rohrende (2) ein Spitzende und das zweite Rohrende (3) eine Muffe ist, wobei Spitzende und Muffe aus Beton oder Kunststoff bestehen.
